# EUROPÄISCHE PATENTSCHRIFT

(11) **EP 3 522 557 B1**
(45) Veröffentlichungstag und Bekanntmachung des Hinweises auf die Patenterteilung: **17.07.2024**
(21) Anmeldenummer: 19154953.4
(22) Anmeldetag: 01.02.2019
(51) Int. Cl.: H04Q 9/02

(54) **VERFAHREN ZUM TELEMETRISCHEN DATENAUSTAUSCH ZWISCHEN MINDESTENS EINER LANDWIRTSCHAFTLICHEN ARBEITSMASCHINE UND EINEM LEITRECHNER SOWIE LANDWIRTSCHAFTLICHE ARBEITSMASCHINE DAFÜR**
METHOD FOR TELEMETRIC DATA EXCHANGE BETWEEN AT LEAST ONE AGRICULTURAL MACHINE AND A CONTROL COMPUTER AND AGRICULTURAL MACHINE FOR SAME
PROCÉDÉ D'ÉCHANGE TÉLÉMÉTRIQUE DE DONNÉES ENTRE AU MOINS UN ENGIN DE TRAVAIL AGRICOLE ET UN CALCULATEUR PILOTE AINSI QU'ENGIN DE TRAVAIL AGRICOLE CORRESPONDANT

(30) Priorität: 05.02.2018 DE 102018102432
(43) Veröffentlichungstag der Anmeldung: 07.08.2019
(73) Patentinhaber: CLAAS E-Systems GmbH, 49201 Dissen (DE)
(72) Erfinder: Warkentin, Heinrich, 33330 Gütersloh (DE)
(74) Vertreter: CLAAS Gruppe

(56) Entgegenhaltungen:
- EP-A1- 2 645 318
- WO-A1-2013/013200
- MING LI ET AL: "PRESTO", IEEE / ACM TRANSACTIONS ON NETWORKING, IEEE / ACM, NEW YORK, NY, US, vol. 17, no. 4, 1 August 2009 (2009-08-01), pages 1256 - 1269, XP058250243, ISSN: 1063-6692, DOI: 10.1109/TNET.2008.2006818

## Beschreibung

Die vorliegende Erfindung betrifft ein Verfahren zum telemetrischen Datenaustausch zwischen mindestens einer landwirtschaftlichen Arbeitsmaschine und einem Leitrechner, wobei die landwirtschaftliche Arbeitsmaschine einen Bordrechner umfasst, mit dem in einem festen Zeitintervall Nutzdaten gemessen und an den Leitrechner übertragen werden. Die vorliegende Erfindung betrifft weiterhin ein solche landwirtschaftliche Arbeitsmaschine sowie eine Anordnung aus einer solchen landwirtschaftlichen Arbeitsmaschine sowie einem Leitrechner.

In landwirtschaftlichen Anwendungen werden Nutzdaten einer landwirtschaftlichen Arbeitsmaschine häufig zeitabhängig erfasst und ausgewertet, beispielsweise um sich eine Übersicht über den Erntestatus beim Abernten eines Feldes zu verschaffen, um eine landwirtschaftliche Arbeitsmaschine und insbesondere ihre Arbeitsaggregate zu überwachen oder um eine Arbeitsflotte bestehend aus mehreren landwirtschaftlichen Arbeitsmaschinen zu überwachen. Solche Nutzdaten sind beispielsweise Maschinendaten wie insbesondere eine Fahrgeschwindigkeit oder eine Motordrehzahl, Daten von Arbeitsaggregaten wie insbesondere eine Trommeldrehzahl, ein Durchsatz, ein Korntankfüllstand oder ein Gerätestatus beispielsweise eines Anbaugerätes, Erntedaten wie insbesondere Feuchtigkeit, Bodenverhältnisse oder Reifegrad, oder Ortsdaten wie insbesondere GPS- Daten. Um kontinuierlich eine aktuelle Übersicht zu erhalten, werden die Nutzdaten in einem festgelegten Zeitintervall mit Hilfe eines Bordrechners der landwirtschaftlichen Arbeitsmaschine erfasst und gegebenenfalls (zwischen-) gespeichert (geloggt). Dann werden sie, insbesondere in demselben Zeitintervall, an einen Leitrechner übertragen, und dort ausgewertet und gegebenenfalls gespeichert. Die Patentschrift DE 196 24 019 B4 beschreibt eine Anordnung aus mehreren landwirtschaftlichen Arbeitsmaschinen und einem Leitrechner, bei der Nutzdaten von den landwirtschaftlichen Arbeitsmaschinen einer Flotte an den Leitrechner übertragen werden, um den Einsatz der Flotte zu planen, zu überwachen und zu optimieren.

Die WO2013013200A1 beschreibt ein System zum Messen von Flüssigkeitsständen in einem Speichertank und Ausgeben einer Warnmeldung, wenn sich der Flüssigkeitsstand gegenüber einem vorherigen Flüssigkeitsstand um einen Schwellenwert geändert hat.

Für die Übertragung zum Leitrechner, der sich zumeist an einem örtlich entfernten Standort befindet, wird in der Regel eine Datenfernübertragung, beispielsweise über ein Mobilfunknetz, genutzt. Dabei fallen für die Datenfernübertragung in Abhängigkeit von der übertragenen Datenmenge Gebühren an. In Regionen mit schlechter Internetverbindung kann die Nutzung von Internetdiensten außerdem zum Teil erst durch eine Datenreduktion möglich sein.

Für das Erfassen der Nutzdaten werden Zeitintervalle von einigen Sekunden genutzt. Die Zeitintervalle werden eher lang gewählt, beispielsweise 5s - 15s, um die bei einer Übertragung über ein Mobilfunknetz anfallenden Gebühren zu begrenzen. In Abhängigkeit von der Anwendung hat sich aber gezeigt, dass es oftmals wünschenswert wäre, die Nutzdaten häufiger zu erfassen, um auch Änderungen zu erkennen, die bei langem Zeitintervall zwischen die Erfassungszeitpunkte fallen. Dadurch entstehen jedoch größere Datenmengen, deren Übertragung entsprechend höhere Kosten verursacht.

Um die größeren Datenmengen zu verringern, sind, insbesondere für Zeitreihendaten, Komprimierungsalgorithmen wie beispielsweise run- length encoding, bei dem die Daten der Häufigkeit nach kodiert werden, und delta encoding, beim dem Datendifferenzen kodiert werden, bekannt. Diese Algorithmen liefern gute Kompressionsresultate. Jedoch erfordern beide Verfahren einen zum Teil erheblichen zusätzlichen Rechenaufwand sowohl auf dem Bordrechner der landwirtschaftlichen Arbeitsmaschine als auch auf dem Leitrechner.

Eine Integration von RDP (Ramer- Douglas- Peucker Algorithmus), der ebenfalls gute Kompressionsresultate liefert, in die Kommunikationssysteme der landwirtschaftlichen Arbeitsmaschinen ist aufgrund seiner Laufzeitkomplexität eher schwierig oder sogar unmöglich.

Aufgabe der Erfindung ist es daher, ein bezüglich des Informationsgehaltes der übertragenen, zeitabhängig erfassten Nutzdaten gegenüber den für ihre Datenfernübertragung anfallenden Gebühren optimiertes Verfahren zum telemetrischen Datenaustausch zwischen mindestens einer landwirtschaftlichen Arbeitsmaschine und einem Leitrechner zu schaffen, sowie eine landwirtschaftliche Arbeitsmaschine, mit der das Verfahren ausführbar ist.

Die Aufgabe wird gelöst mit einem Verfahren mit den Merkmalen des unabhängigen Patentanspruchs 1, mit einer landwirtschaftlichen Arbeitsmaschine mit den Merkmalen des unabhängigen Patentanspruchs 9, sowie mit einer Anordnung umfassend die landwirtschaftliche Arbeitsmaschine sowie einen Leitrechner mit den Merkmalen des unabhängigen Patentanspruchs 13. Vorteilhafte Ausführungsformen sind den abhängigen Ansprüchen entnehmbar.

Dafür wird ein Verfahren zum telemetrischen Datenaustausch zwischen mindestens einer landwirtschaftlichen Arbeitsmaschine und einem Leitrechner geschaffen. Um das Verfahren auszuführen, umfasst die landwirtschaftliche Arbeitsmaschine einen Bordrechner, mit dem in einem festen Zeitintervall mindestens ein Nutzdatum gemessen wird. Das Verfahren sieht vor, dass das Nutzdatum in dem festen Zeitintervall vom Bordrechner an den Leitrechner übertragen wird.

Das Verfahren zeichnet sich dadurch aus, dass jeweils ein für ein Nutzdatum gemessener Messwert mit dem zuvor für das Nutzdatum erfassten Messwert verglichen wird, und dass der gemessene Messwert des Nutzdatums nur dann als neuer Messwert erfasst und an den Leitrechner übertragen wird, wenn er sich gegenüber dem zuvor erfassten Messwert um mindestens einen Schwellwert unterscheidet.

Das Verfahren betrifft speziell zeitabhängig erfasste Nutzdaten, deren zeitlicher Verlauf des Messsignals in einem festen Zeitintervall gemessen wird. Es werden dabei nur solche Messwerte als neue Messwerte erfasst, bei denen sich der Verlauf des Messsignals des Nutzdatums um mindestens den Schwellwert, also signifikant, ändert. Dann werden auch nur diese Messwerte an den Leitrechner übertragen. Demgegenüber werden die Messwerte des Nutzdatums, deren Änderung geringer als der Schwellwert ist, nicht neu erfasst und auch nicht übertragen. Gegenüber einem bisherigen Verfahren, bei dem alle gemessenen Messwerte eines Nutzdatums an den Leitrechner übertragen werden, ist die anfallende Datenmenge bei Ausführung des erfindungsgemäßen Verfahrens somit verringert. Dadurch fallen bei einer Datenfernübertragung, beispielsweise über ein Mobilfunknetz, entsprechend geringere Gebühren an. In Regionen mit schlechter Internetverbindung ermöglicht zudem die Datenreduktion gegebenenfalls erst die Nutzung des Internets.

Aufgrund der geringeren Datenmenge kann bei gleichbleibenden Gebühren das Erfassen des Nutzdatums daher häufiger erfolgen, als bei dem bisherigen Verfahren. Das Zeitintervall, in dem das Nutzdatum erfasst wird, kann daher verringert werden, ohne das die Gebühren steigen. Bevorzugt wird daher für die Durchführung des erfindungsgemäßen Verfahrens ein Zeitintervall von weniger als 5s - 15s gewählt. Vorzugsweise beträgt das Zeitintervall 1s - 12s, ganz besonders bevorzugt 1s - 5s. Dadurch können bei gleichbleibenden oder sogar verringerten Gebühren auch Änderungen erfasst werden, die zuvor zwischen die Erfassungszeitpunkte des Zeitintervalls fielen. Der Informationsgehalt der Messung des Nutzdatums wird mit dem erfindungsgemäßen Verfahren daher bei gleichbleibenden Gebühren vergrößert.

Der neue erfasste Messwert wird bevorzugt im Bordrechner (zwischen-) gespeichert (geloggt). Da nicht jeder gemessene Messwert erfasst wird, ist die nun anfallende, zu speichernde Datenmenge gegenüber der des bisherigen Verfahrens verringert. Durch das (Zwischen-) Speichern kann weiterhin eine Übertragung an den Leitrechner auch noch später erfolgen, und/oder bei einem Übertragungsfehler wiederholt werden. Auch ermöglicht das (Zwischen-) Speichern eine spätere Auswertung der erfassten Messwerte am Bordrechner.

Erfindungsgemäß werden mehrere verschiedene Nutzdaten in dem Zeitintervall erfasst, wobei die neu erfassten Messwerte der Nutzdaten in einem Datenpaket an den Leitrechner übertragen werden. Dabei wird das Datenpaket in einem Nutzdatentelegramm versendet. Dabei ist die Position der Messwerte der Nutzdaten im Datenpaket festgelegt. Weiterhin ist jeweils zwischen den Messwerten der Nutzdaten im Datenpaket jeweils ein Trennzeichen vorgesehen. Bei gleichbleibender Reihenfolge der Messwerte der Nutzdaten im Nutzdatentelegramm ist am Leitrechner dann durch aufeinander folgende Trennzeichen erkennbar, dass für ein Nutzdatum kein neuer Messwert erfasst und übertragen wird. Der vorher erfasste Messwert hat sich in dem Zeitintervall dann nicht signifikant geändert.

Das Messsignal kann im Leitrechner angenähert eruiert werden, indem die erfassten Messwerte miteinander verbunden werden. Weiterhin ist es bevorzugt, dass das Datenpaket einen Zeitstempel umfasst. Sofern für ein Nutzdatum zum Zeitpunkt des Zeitstempels kein neuer Messwert übertragen wird, wird im Leitrechner ebenfalls bevorzugt der vorher erfasste Messwert als neuer Messwert genutzt.

Nutzdaten sind bevorzugt
- Maschinendaten wie beispielsweise eine Fahrgeschwindigkeit oder eine Motordrehzahl,
- Daten der Arbeitsaggregate wie beispielsweise eine Trommeldrehzahl, ein Durchsatz, ein Korntankfüllstand oder ein Gerätestatus beispielsweise eines Anbaugerätes,
- Erntedaten wie beispielsweise eine Feuchtigkeit, Bodenverhältnisse oder ein Reifegrad eines Ernteguts, und/oder
- Ortsdaten wie beispielsweise GPS- Daten (GPS- Länge / GPS- Breite).

Jedem Nutzdatum ist vorzugsweise jeweils ein nutzdatenspezifischer Schwellwert und/oder ein nutzdatenspezifisches Zeitintervall zugeordnet. Die Nutzdaten, die Schwellwerte und/oder die Zeitintervalle sind bevorzugt jeweils vom Typ der landwirtschaftlichen Arbeitsmaschine, und/oder von der Baureihe der landwirtschaftlichen Arbeitsmaschine abhängig. Landwirtschaftliche Arbeitsmaschine im Sinne der Erfindung sind vom Typ Traktor, Mähdrescher, Feldhäcksler, Ballenpresse oder ähnlich. Baureihen im Sinne der Erfindung sind verschiedene Baureihen desselben Typs der landwirtschaftlichen Arbeitsmaschine wie beispielsweise für den Typ Mähdrescher die Baureihen Tucano 450, Tucano 500 oder Lexion 760. Die Nutzdaten und/oder ihre Schwellwerte und/oder Zeitintervalle können sich zudem in Abhängigkeit von dem an der landwirtschaftlichen Arbeitsmaschine angebauten Anbaugerät, beispielsweise Pick Up oder Haspel, unterscheiden.

Die Schwellwerte für die Nutzdaten und/oder die Zeitintervalle, in denen die Messsignale erfasst werden, sind bevorzugt Typ-, Baureihen- und/oder Anbaugeräte- spezifisch, insbesondere durch den Hersteller, insbesondere am Leitrechner, voreingestellt. Sie können ebenfalls bevorzugt zumindest teilweise durch einen Nutzer der landwirtschaftlichen Arbeitsmaschine einstellbar sein, und/oder zumindest teilweise automatisch eingestellt werden.

Die Schwellwerte und/oder Zeitintervalle werden bevorzugt unabhängig von den Nutzdaten vom Leitrechner an den Bordrechner übertragen. Besonders bevorzugt erfolgt dies in einem Konfigurationstelegramm. Das Konfigurationstelegramm umfasst bevorzugt ebenfalls ein vordefiniertes Datenpaket, in welchem die Reihenfolge der Schwellwerte der Nutzdaten festgelegt ist. Ebenfalls bevorzugt sind die Schwellwerte der Nutzdaten im Datenpaket durch ein Trennzeichen voneinander getrennt. Da die Schwellwerte nicht ständig neu eingestellt werden, ist eine Übertragung der Schwellwerte vom Leitrechner an die landwirtschaftliche Arbeitsmaschine nur selten, insbesondere nur einmalig vor der Messung, erforderlich. Daher ist durch die Übertragung der Schwellwerte unabhängig von den Nutzdaten die zu übertragende Datenmenge minimiert.

Die Aufgabe wird weiterhin gelöst mit einer landwirtschaftlichen Arbeitsmaschine mit einem Bordrechner zur Ausführung des erfindungsgemäßen Verfahrens. Die landwirtschaftliche Arbeitsmaschine ist ein Mähdrescher, ein Feldhäcksler, eine Ballenpresse, ein Traktor, ein Überladewagen, ein Teleskoplader, eine Futtererntemaschine oder ähnlich.

Zur Durchführung des Verfahrens weist der Bordrechner zumindest einen Sensor zum Messen eines Messwertes eines Nutzdatums auf, und/oder er ist an einen solchen Sensor, insbesondere über eine Kommunikationsschnittstelle, angeschlossen.

Der Bordrechner weist eine Recheneinheit auf, die dazu ausgebildet ist, einen gemessenen Messwert eines Nutzdatums mit dem zuvor erfassten Messwert des Nutzdatums zu vergleichen. Weiterhin ist die Recheneinheit dazu ausgebildet, den gemessenen Messwert nur dann als neuen Messwert zu erfassen und an den Leitrechner zu übertragen, wenn er sich von dem zuvor erfassten Messwert um mindestens einen Schwellwert unterscheidet. Der Schwellwert kann dabei als absoluter Wert angegeben sein, oder prozentual. Dadurch erfasst die Recheneinheit nur signifikante Änderungen des Messsignals des Nutzdatums und überträgt auch nur diese an den Leitrechner.

Besonders bevorzugt werden die Messwerte einer Vielzahl von Nutzdaten gleichzeitig in dem Zeitintervall erfasst. Da nicht alle gemessenen Messwerte erfasst und an den Leitrechner übertragen werden, sondern nur die, bei denen sich der gemessene Messwert gegenüber dem zuvor erfassten Messwert um mindestens den Schwellwert geändert hat, fällt eine entsprechend verringerte Datenmenge für die Übertragung an den Leitrechner an. Aufgrund der Vielzahl der Nutzdaten ist die Datenmenge erheblich verringert. Dadurch werden entweder die Gebühren für die Übertragung erheblich verringert, oder das Zeitintervall für die Messung kann deutlich verkürzt werden, so dass der Informationsgehalt für die Messung der Nutzdaten deutlich steigt.

Sofern die Länge eines Nutzdatentelegramms, und daher die Länge des Datenpaketes, begrenzt ist, sind gegebenenfalls mehrere verschiedene Nutzdatentelegramme für die Übertragung aller Nutzdaten erforderlich. Dann ist es besonders bevorzugt, dass in Abhängigkeit von der Relevanz der Nutzdaten eine Auswahl getroffen wird, für welche Nutzdaten das Zeitintervall um wieviel erhöht wird. Dabei werden vorzugsweise nur Nutzdaten in demselben Nutzdatentelegramm übertragen, deren Messung in demselben Zeitintervall erfolgt.

Der Bordrechner umfasst mindestens eine Kommunikationsschnittstelle zur Übertragung der aktuell erfassten Messwerte an den Leitrechner. Da der Leitrechner zumeist an einem räumlich entfernten Ort angeordnet ist, beispielsweise in einem Rechenzentrum des Landwirts oder des Herstellers der landwirtschaftlichen Arbeitsmaschine, ist es bevorzugt, dass diese Kommunikationsschnittstelle eine Datenfernübertragungsschnittstelle ist, vorzugsweise eine Mobilfunkübertragungsschnittstelle.

Neben der zumindest einen Datenfernübertragungsschnittstelle kann der Bordrechner zudem weitere Kommunikationsschnittstellen zur drahtlosen oder drahtbehafteten Datenübertragung aufweisen, beispielsweise WLAN-, Bluetooth-, LAN-, IRDA-, CAN- Bus oder eine ähnliche Schnittstellen, die wahlweise für die Übertragung der Nutzdaten vom Bordrechner zum Leitrechner und/oder zum Anschließen von Sensoren nutzbar sind. Dabei sind die Schnittstellen desselben Typs bevorzugt miteinander vernetzt.

Weiterhin bevorzugt weist der Bordrechner zudem einen Datenspeicher zum Speichern der erfassten Messwerte auf.

Um eine Einstellung der Messungen der Nutzdaten eine Auswertung der Messergebnisse, sowie eine Darstellung der Messergebnisse für den Nutzer zu ermöglichen, weist zumindest der Leitrechner weiterhin bevorzugt eine Benutzerschnittstelle auf. Die Benutzerschnittstelle umfasst bevorzugt zumindest ein Eingabegerät wie beispielsweise eine Tastatur sowie eine Anzeige wie beispielsweise ein Display oder einen Monitor, an dem die Messwerte und/oder Schwellwerte und/oder Zeitintervalle für den Benutzer darstellbar sind. Es ist aber weiterhin bevorzugt, Einstellungen für die Messung sowie die Auswertung der Messergebnisse über eine mobile Recheneinheit, beispielsweise einen Laptop, einen Tablet PC oder ein Smartphone, oder am Bordrechner zu ermöglichen.

Die Aufgabe wird weiterhin gelöst mit einer Anordnung aus mindestens einer solchen landwirtschaftlichen Arbeitsmaschine und einem, insbesondere räumlich entfernten, Leitrechner. Es ist aber ebenfalls bevorzugt, dass der Leitrechner in der landwirtschaftlichen Arbeitsmaschine angeordnet ist, oder dass der Bordrechner gleichzeitig als Leitrechner genutzt wird. Der Leitrechner ist bevorzugt als Leitstand für die landwirtschaftliche Arbeitsmaschine oder mehrere landwirtschaftliche Arbeitsmaschinen vorgesehen, und/oder für die Auswertung der Nutzdaten. Weiterhin bevorzugt wird er für Einstellungen, beispielsweise der Schwellwerte, durch den Nutzer genutzt.

Die Erfindung wird im Folgenden anhand von Figuren erläutert. Die Figuren sind lediglich beispielhaft und schränken den allgemeinen Erfindungsgedanken nicht ein. Es zeigen:
- Fig. 1: eine Anordnung aus mehreren landwirtschaftlichen Arbeitsmaschinen und einem Leitrechner;
- Fig. 2: in (a) und (b) einen Verlauf eines Messsignals für ein Nutzdatum und einen Verlauf eines anhand von erfassten Messwerten eruierten Messsignals für das Nutzdatum;
- Fig. 3: in (a) und (b) beispielhaft tabellarisch gemessene Messwerte für mehrere Nutzdaten, wobei in (a) alle gemessenen, und in (b) nur die erfassten Messwerte gelistet sind; und
- Fig. 4: schematisch verschiedene Nutzdatentelegramme, wobei (a) ein bisheriges Nutzdatentelegramm zeigt, und wobei (b) ein erfindungsgemäßes Nutzdatentelegramm zeigt.

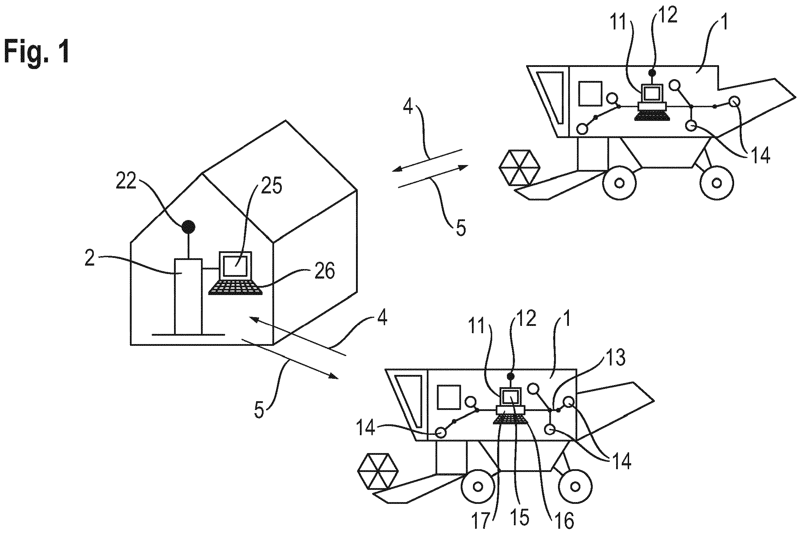

Figur 1 zeigt eine Anordnung aus einem Leitrechner 2 und mehreren, hier zwei, landwirtschaftlichen Arbeitsmaschinen 1. Bei den landwirtschaftlichen Arbeitsmaschinen 1 handelt es sich hier beispielhaft um Mähdrescher. Die Erfindung ist aber nicht auf Mähdrescher beschränkt, sondern umfasst auch andere landwirtschaftliche Arbeitsmaschinen 1, beispielsweise Feldhäcksler, Ballenpressen, Traktoren, Überladewagen, Teleskoplader, Futtererntemaschinen oder ähnlich. Im Folgenden werden die Begriffe landwirtschaftliche Arbeitsmaschine 1 und Mähdrescher synonym verwendet.

Die Mähdrescher 1 weisen jeweils einen Bordrechner 11 auf. Im Folgenden werden die Mähdrescher 1 anhand eines der Mähdrescher 1 beschrieben.

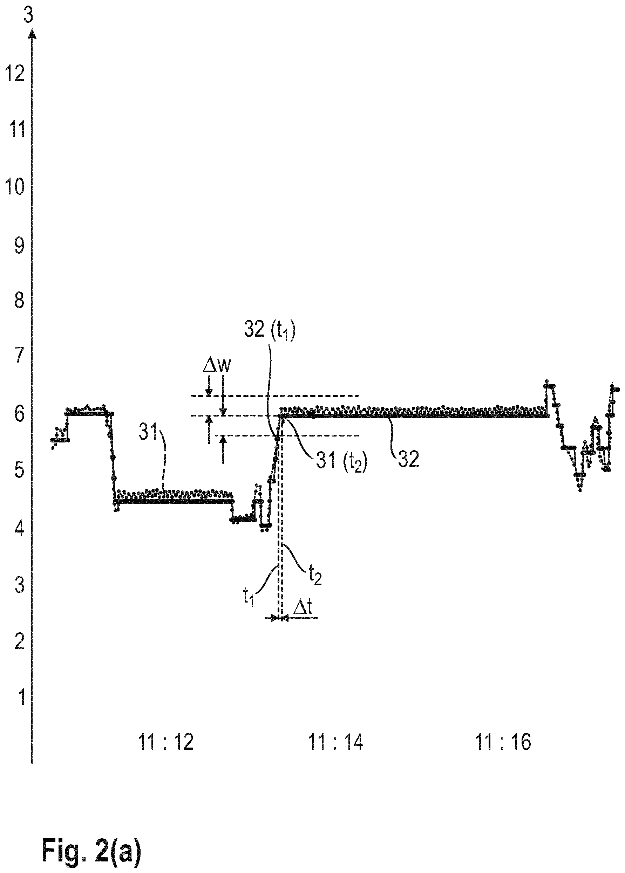

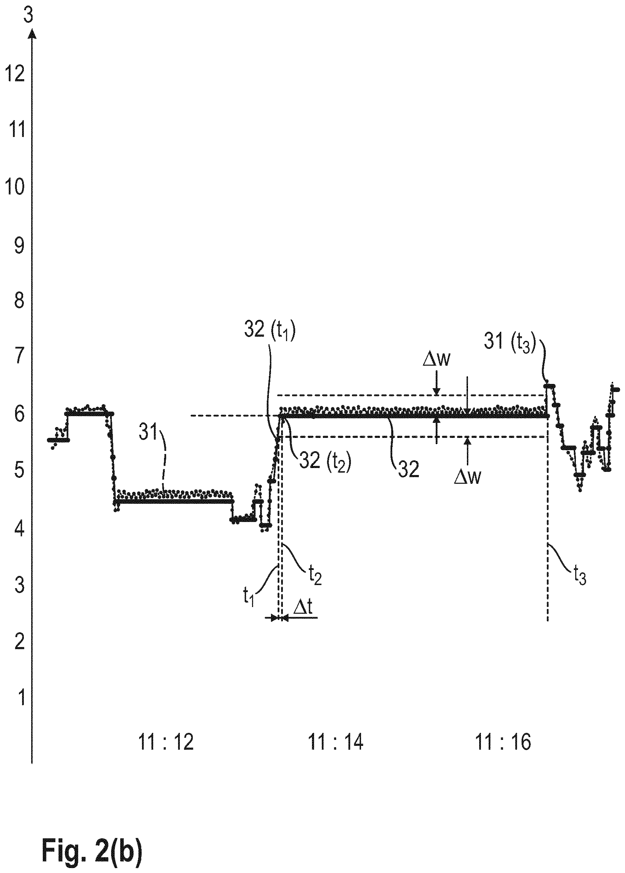

An den Bordrechner 11 des Mähdreschers 1 ist über eine Kommunikationsschnittstelle (nicht dargestellt) ein drahtbehaftetes Netzwerk 13, hier beispielhaft ein CAN- Bus- Netzwerk, angeschlossen. Das Netzwerk 13 verbindet Kommunikationsschnittstellen (nicht bezeichnet) miteinander, an denen jeweils ein Sensor 14 zum Messen von verschiedenen Nutzdaten 3 (s. Fig. 2) angeordnet ist. Zudem weist der Bordrechner 11 eine als Datenfernübertragungsschnittstelle 12 ausgebildete Kommunikationsschnittstelle, hier eine Mobilfunkschnittstelle, auf.

Der Bordrechner 11 weist eine Recheneinheit 17 auf, die dazu ausgebildet ist, die Nutzdaten 3 zu erfassen. Dafür wird jedes Nutzdatum 3 mit dem für ihn vorgesehenen Sensor 14 gemessen und der gemessene Messwert 31(t2) jedes Nutzdatums 3 wird mit dem zuvor erfassten Messwert 32(t1) des Nutzdatums 3 verglichen. Dabei bezeichnen t1 und t2 aufeinanderfolgende Betrachtungszeitpunkte. Zudem sind das Messsignal und die gemessenen Messwerte mit dem Bezugszeichen 31 bezeichnet. Die neu erfassten Messwerte sind mit dem Bezugszeichen 32 bezeichnet.

Für jedes der Nutzdaten 3 wird der gemessene Messwert 31(t2) jeweils nur unter der Bedingung als neuer Messwert 32(t2) erfasst, dass er sich gegenüber dem zuvor für das Nutzdatum 3 erfassten Messwert 32(t1) um mindestens einen Schwellwert Δw geändert hat. Dann werden auch nur diese neu erfassten Messwerte 32(t2) an den Leitrechner 2 übertragen, und nicht alle gemessenen Messwerte 31(t2). Dafür wird die Datenfernübertragungsschnittstelle 12 genutzt.

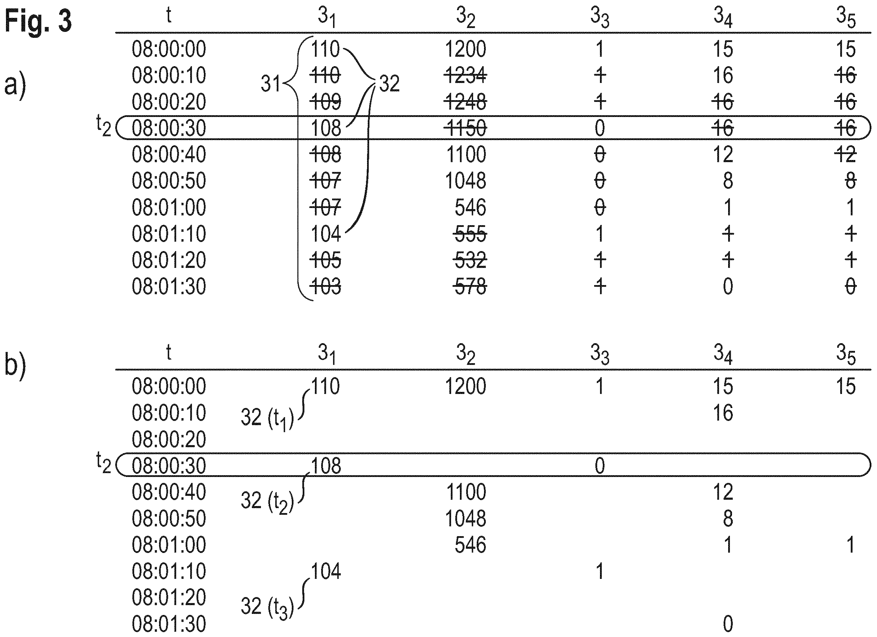

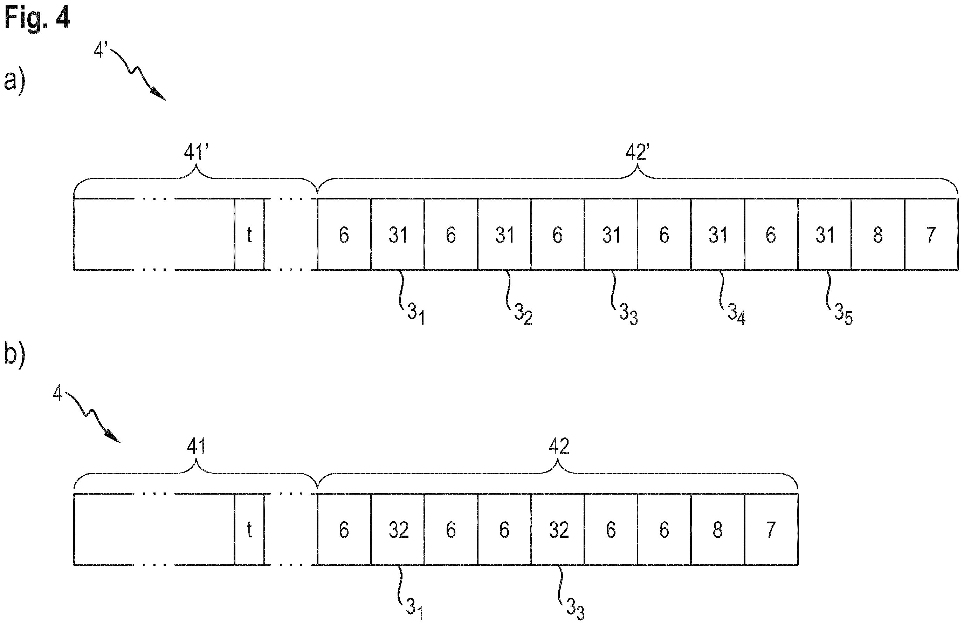

Die neu erfassten Messwerte 32(t2) werden für die Übertragung zum Leitrechner 2 in einem vordefinierten Datenpaket 42 (s. Fig. 3) zusammengefasst und in einem Nutzdatentelegramm 4 (s. Fig. 4) an den Leitrechner 2 übertragen. Für den Empfang des Nutzdatentelegramms 4 ist am Leitrechner eine zur Datenfernübertragungsschnittstelle 12 des Bordrechners 1 korrespondierende Datenfernübertragungsschnittstelle 22 vorgesehen.

Die Schwellwerte Δw für die Nutzdaten 3 sind in Abhängigkeit vom Typ der landwirtschaftlichen Arbeitsmaschine 1, ihrer Baureihe und/oder einem an die landwirtschaftliche Arbeitsmaschine 1 angeordneten Anbaugerät (nicht bezeichnet) nutzdatenspezifisch einstellbar. Dafür ist hier eine Konfiguration am Leitrechner 2 vorgesehen.

Dafür werden die Schwellwerte Δw und/oder die Zeitintervalle Δt der Nutzdaten 3 in einem separaten Konfigurationstelegramm 5 vom Leitrechner 2 an den Mähdrescher 1 übertragen. Dies muss nur ab und zu oder sogar nur einmalig erfolgen, so dass die dafür erforderliche Datenmenge gering ist und nur sehr geringe Gebühren für die Datenfernübertragung anfallen. Es kann aber auch vorgesehen sein, dass die Konfiguration der Schwellwerte Δw alternativ oder zusätzlich an einem Bordrechner 1 oder einem mobilen Gerät wie beispielsweise einem Smartphone, einem Laptop oder einem Tablet PC (nicht dargestellt) erfolgen kann.

Für die Darstellung der gemessenen und/oder erfassten Messwerte 31, 32 der Nutzdaten 3 sowie Einstellungen für die Messung weisen der Bordrechner 11 des Mähdreschers 1 und/oder der Leitrechner 2 zudem jeweils ein Display 15, 25 sowie eine Tastatur 16, 26 auf.

Der Leitrechner 2 ist hier beispielhaft in einem Rechenzentrum angeordnet. Er kann aber auch an einem anderen Ort angeordnet sein, beispielsweise in einer landwirtschaftlichen Arbeitsmaschine 1. Es kann aber auch vorgesehen sein, dass der Bordrechner 1 einer der landwirtschaftlichen Arbeitsmaschinen 1 als Leitrechner 2 genutzt wird. Zudem kann der Leitrechner 2 auch ein mobiler Rechner sein, wie beispielsweise ein Laptop oder ein Tablet PC.

In Fig. 2 ist in (a) beispielhaft ein Messsignal 31 für ein Nutzdatum 3 über die Zeit t dargestellt.

Um den Verlauf des Messsignals 31 des Nutzdatums 3 nachvollziehen zu können, wird das Messsignal 31 des Nutzdatums 3 in einem festen Zeitintervall Δt mit einem Sensor 14 der landwirtschaftlichen Arbeitsmaschine 1 gemessen. Das erfindungsgemäße Verfahren sieht vor, den für ein Nutzdatum 3 zu einem zweiten Zeitpunkt t2 gemessenen Messwert 31(t2) mit einem zu einem ersten, früheren Zeitpunkt t1 - und daher vorher - erfassten Messwert 32(t1) zu vergleichen. Der zum zweiten Zeitpunkt t2 gemessene Messwert 31(t2) wird nur dann als neuer Messwert 32(t2) erfasst, wenn er sich gegenüber dem vorher erfassten Messwert 32(t1) um mindestens einen Schwellwert Δw geändert hat. Zudem wird der gemessene Messwert 31(t2) auch nur an den Leitrechner 2 übertragen, wenn er als neuer Messwert 32(t2) erfasst wurde.

Da nicht alle gemessenen Messwerte 31 für das Nutzdatum 3 an den Leitrechner 2 übertragen werden, können dadurch Gebühren für die Datenfernübertragung sowie Serverplatz eingespart werden. Zudem kann die verringerte zu übertragene Datenmenge in Regionen mit schlechter Internetanbindung die Nutzung von Internetdiensten auch erst ermöglichen.

Dies ist hier beispielhaft für den zweiten Messzeitpunkt t2 veranschaulicht. Der zum zweiten Messzeitpunkt t2 gemessene Messwert 31(t2) wird mit dem zum früheren ersten Messzeitpunkt t1 erfassten Messwert 32(t1) verglichen. Da der zum zweiten Messzeitpunkt t2 gemessene Messwert 31(t2) sich um mehr als den Schwellwert Δw von dem vorher erfassten Messwert 32(t1) unterscheidet, wird er als neuer Messwert 32(t2) erfasst. Dafür wird er geloggt und in einem Datenspeicher (nicht dargestellt) des Bordrechners 1 abgelegt.

Fig. 2 (b) zeigt die Erfassung eines folgenden Messwertes 32(t3). Das Messsignal 31 des Nutzdatums 3 ändert sich nach dem zweiten Messzeitpunkt t₂ über einen längeren Zeitraum nur so geringfügig, dass die jeweils in dem festen Zeitintervall Δt gemessenen Messwerte 31 sich nicht um mehr als den Schwellwert Δw ändern, und daher auch nicht als neue Messwerte 32 erfasst werden. Erst zu dem dritten Messzeitpunkt t3 ändert sich der Verlauf des Messsignals 31 ausreichend signifikant, so dass der dann gemessene Messwert 31(t3) als neuer Messwert 32(t3) erfasst und an den Leitrechner 2 übertragen wird.

Zur Veranschaulichung ist der Verlauf des Messsignals 31 hier anhand der übertragenen Messpunkte 32 eruiert, indem die übertragenen Messpunkte 32 miteinander verbunden sind. Sichtbar ist, dass sich bei einer geschickten Wahl des Schwellwertes Δw eine gute Annäherung an den Verlauf des Messsignals 31 ergibt. Gleichzeitig kann die anfallende Datenmenge deutlich verringert werden.

In Fig. 3 sind in (a) die in dem festen Zeitintervall mit zehn- sekündlichem Abstand Δt gemessenen Messwerte 31 mehrerer Nutzdaten 3₁ - 3₅ tabellarisch aufgelistet. Für das erste Nutzdatum 3₁ wird ein Schwellwert Δw von +-1% genutzt, für das zweite Nutzdatum 3₂ ein Schwellwert Δw von +-50, für das dritte und vierte Nutzdatum 3₃, 3₄ jeweils ein Schwellwert Δw von +-0 und für das fünfte Nutzdatum 3₅ ein Schwellwert Δw von +-10.

Die gemessenen Messwerte 31, die sich zu geringfügig ändern, so dass sie sich nicht um mehr als den Schwellwert Δw gegenüber dem zuvor erfassten Messwert 32 unterscheiden, sind durchgestrichen dargestellt. Sie werden nicht als neue Messwerte 32 erfasst, und daher auch nicht an den Leitrechner 2 übertragen. Nur die nicht durchgestrichenen Messwerte 31 unterscheiden sich von dem jeweils zuvor erfassten Messwert 32 um mehr als den Schwellwert Δw, und daher ausreichend, um erfasst und übertragen zu werden.

Fig. 3 (b) zeigt nur die nicht durchgestrichenen, und daher neu erfassten Messwerte 32 tabellarisch. Sichtbar ist die erhebliche Einsparung der Datenmenge.

Für das Nutzdatum 31 sind in Fig. 4 (a) ein herkömmliches Nutzdatentelegramm 4' und in Fig. 4 (b) ein mithilfe des erfindungsgemäßen Verfahrens verkürztes Nutzdatentelegramm 4 schematisch dargestellt. Betrachtet wird hier beispielhaft ein zweiter Messzeitpunkt t2 der Tabellen der Fig. 3 (a) und (b).

Ein solches Nutzdatentelegramm 4`, 4 kann einen Telegrammkopf 41', 41 aufweisen, der Daten wie beispielsweise eine Telegrammkennung (nicht dargestellt), eine Anzahl übertragener Bytes (nicht dargestellt), den Adressaten (nicht dargestellt) und den Adressenten (nicht dargestellt) des Telegramms 4`, 4 enthält. Zudem enthält das Nutzdatentelegramm 4`, 4 einen Zeitstempel t, der hier beispielhaft im Telegrammkopf 41 `, 41 angeordnet ist. Auf den Telegrammkopf 41', 41 folgt ein Datenpaket 42`, 42, das die für das Nutzdatentelegramm 4`, 4 vorgesehenen Nutzdaten 3 enthält. Diese sind in einer vordefinierten Reihenfolge positioniert und jeweils durch ein Trennzeichen 6 voneinander getrennt. Prinzipiell kann der Zeitstempel t auch im Datenpaket 42`, 42 angeordnet sein. Neben den im Datenpaket 42`, 42 vorgesehenen Nutzdaten 3 enthält das Datenpaket 42`, 42 hier eine Telegrammende- Kennung 8 sowie ein Sicherheitszeichen 7 wie beispielsweise ein CRC- Checkbyte.

Im herkömmlichen Nutzdatentelegramm 4' werden alle zum Zeitpunkt des Zeitstempels t gemessenen Messwerte 31 (s. Fig. 3 (a)) aller für dieses Nutzdatentelegramm 4' vorgesehenen Nutzdaten 3₁ - 3₅ an den Leitrechner 2 übertragen. Dabei sind die Messwerte 31 der Nutzdaten 3₁ - 3₅ durch ein Trennzeichen 6 voneinander getrennt. Bis zur Telegrammende- Kennung 8 folgt daher im herkömmlichen Nutzdatentelegramm 4' immer auf ein Trennzeichen 6 ein Messwert 31.

Im Gegensatz dazu werden bei dem mithilfe des erfindungsgemäßen Verfahrens verkürzten Nutzdatentelegramm 4 nur die neu erfassten Messwerte 32 der Nutzdaten 3₁ - 3₅ übertragen. Sofern für ein Nutzdatum 3₁ - 3₅ kein Messwert 31 zum Zeitpunkt des Zeitstempels t2 als neuer Messwert 32 erfasst wurde, wird auch kein Wert in das Datenpaket 42 eingefügt. Dann folgen die Trennzeichen 6 unmittelbar aufeinander beziehungsweise am Telegrammende folgt anstelle eines erfassten Messwertes 32 unmittelbar die Telegrammende- Kennung 8 auf das Trennzeichen 6.

Sichtbar ist, dass zum Zeitpunkt t2 nur Messwerte 32(t2) für zwei der Nutzdaten 3₁, 3₃ übertragen werden. Die Ersparnis der Datenmenge ist daher über einen längeren Zeitraum betrachtet erheblich. Gleichzeitig kann durch eine Verkürzung des Zeitintervalls Δt bei gleichbleibenden Gebühren für die Datenfernübertragung der Informationsgehalt deutlich verbessert werden.

### Bezugszeichenliste

- 1: Landwirtschaftliche Arbeitsmaschine
- 11: Bordrechner
- 12, 22: Datenfernübertragungsschnittstelle
- 13: Kommunikationsschnittstelle, CAN- Bus Netzwerk
- 14: Sensor
- 15, 25: Anzeige
- 16, 26: Tastatur
- 17: Recheneinheit
- 2: Leitrechner
- 3, 3₁, 3₂ ... 3ᵢ: Nutzdatum
- 31: Gemessener Messwert
- 32: Erfasster Messwert
- 4: Nutzdatentelegramm
- 41: Telegrammkopf
- 42: Datenpaket
- 4': Bisheriges Nutzdatentelegramm
- 41': Bisheriges Telegrammkopf
- 42': Bisheriges Datenpaket
- 5: Konfigurationstelegramm
- 6: Trennzeichen
- 7: Sicherheitszeichen, CRC- Checkbyte
- 8: Telegrammende- Kennung
- t: Zeit, Zeitstempel
- t1, t2, t3: Betrachtungszeitpunkte
- Δt: Zeitintervall
- Δw: Schwellwert

## Patentansprüche

1. Verfahren zum telemetrischen Datenaustausch zwischen mindestens einer landwirtschaftlichen Arbeitsmaschine (1) und einem Leitrechner (2), wobei die landwirtschaftliche Arbeitsmaschine (1) ein Mähdrescher, ein Feldhäcksler, eine Ballenpresse, ein Traktor, ein Überladewagen, ein Teleskoplader oder eine Futtererntemaschine ist, wobei die landwirtschaftliche Arbeitsmaschine (1) einen Bordrechner (11) umfasst, mit dem in einem festen Zeitintervall (Δt) Nutzdaten (3) gemessen und an den Leitrechner (2) übertragen werden, wobei die Nutzdaten (3) Maschinendaten der landwirtschaftlichen Arbeitsmaschine (1) umfassen und für jedes Nutzdatum (3) mittels einem für ihn vorgesehenen Sensor (14) ein Messwert (31(t1,t2)) gemessen wird,
**dadurch gekennzeichnet,**
• **dass** jeweils der für ein Nutzdatum (3) gemessene Messwert (31(t2)) mit dem zuvor für das Nutzdatum (3) erfassten Messwert (32(t1)) verglichen wird, wobei nicht alle gemessenen Messwerte (31(t2)) erfasst und an den Leitrechner (2) übertragen werden, sondern
• **dass** der gemessene Messwert (31(t2)) des Nutzdatums (3) nur dann als neuer Messwert (32(t2)) erfasst und an den Leitrechner (2) übertragen wird, wenn er sich gegenüber dem zuvor erfassten Messwert (32(t1)) um mindestens einen Schwellwert (Δw) unterscheidet.

2. Verfahren nach Anspruch 1, **dadurch gekennzeichnet, dass** mehrere Nutzdaten (3) in dem Zeitintervall (Δt) gemessen werden, wobei die Nutzdaten (3) in einem vordefinierten Datenpaket (42) an den Leitrechner (2) übertragen werden, in dem die Reihenfolge der Nutzdaten (3) festgelegt ist, und in dem zwischen den Nutzdaten (3) jeweils ein Trennzeichen (5) vorgesehen ist, wobei nur die neu erfassten Messwerte (32(t2)) der Nutzdaten (3) an den Leitrechner (2) übertragen werden.

3. Verfahren nach einem der vorhergehenden Ansprüche, **dadurch gekennzeichnet, dass** das Datenpaket (42) einen Zeitstempel (6) umfasst.

4. Verfahren nach einem der vorhergehenden Ansprüche, **dadurch gekennzeichnet, dass** die Nutzdaten (3) Maschinendaten, Daten der Arbeitsaggregate, Erntedaten und/oder Ortsdaten umfassen.

5. Verfahren nach einem der vorhergehenden Ansprüche, **dadurch gekennzeichnet, dass** jedem Nutzdatum (3) jeweils ein nutzdatenspezifischer Schwellwert (Δw) und/oder ein nutzdatenspezifisches Zeitintervall (Δt) zugeordnet ist.

6. Verfahren nach einem der vorhergehenden Ansprüche, **dadurch gekennzeichnet, dass** die Schwellwerte (Δw) und/oder die Zeitintervalle (Δt) der Nutzdaten (3) insbesondere am Leitrechner (2) voreingestellt sind.

7. Verfahren nach einem der vorhergehenden Ansprüche, **dadurch gekennzeichnet, dass** die Schwellwerte (Δw) und/oder Zeitintervalle (Δt) unabhängig von den Nutzdaten (3) an den Leitrechner (2) übertragen werden, insbesondere in einem zweiten vordefinierten Datenpaket.

8. Verfahren nach einem der vorhergehenden Ansprüche, **dadurch gekennzeichnet, dass** die neu erfassten Messwerte (32(t2)) und/oder die Schwellwerte (Δw) und/oder die Zeitintervalle (Δt) der Nutzdaten (3) im Bordrechner (11) gespeichert werden.

9. Landwirtschaftliche Arbeitsmaschine (1) mit einem Bordrechner (11) zur Ausführung des Verfahrens nach einem der vorherigen Ansprüche, wobei die landwirtschaftliche Arbeitsmaschine (1) ein Mähdrescher, ein Feldhäcksler, eine Ballenpresse, ein Traktor, ein Überladewagen, ein Teleskoplader oder eine Futtererntemaschine ist.

10. Landwirtschaftliche Arbeitsmaschine (1) nach Anspruch 9, **dadurch gekennzeichnet, dass** der Bordrechner (11) eine Recheneinheit (17) aufweist, die dazu ausgebildet ist, einen gemessenen Messwert (31(t2)) eines Nutzdatums (3) mit dem zuvor erfassten Messwert (32(t1)) des Nutzdatums (3) zu vergleichen, und ihn nur dann als neuen Messwert (32(t2) zu erfassen und an den Leitrechner (2) zu übertragen, wenn er sich von dem zuvor erfassten Messwert (32(t1)) um mindestens einen Schwellwert (Δw) unterscheidet.

11. Landwirtschaftliche Arbeitsmaschine (1) nach einem der Ansprüche 9 - 10, **dadurch gekennzeichnet, dass** der Bordrechner (11) mindestens eine Kommunikationsschnittstelle (12) zur Übertragung des neu erfassten Messwertes (32(t2)) an den Leitrechner (2) umfasst, insbesondere eine Datenfernübertragungsschnittstelle.

12. Landwirtschaftliche Arbeitsmaschine (1) nach einem der Ansprüche 9 - 11, **dadurch gekennzeichnet, dass** der Bordrechner (11) einen Datenspeicher zum Speichern des neu erfassten Messwertes (32(t2)) aufweist.

13. Anordnung aus mindestens einer landwirtschaftlichen Arbeitsmaschine (1) nach einem der Ansprüche 9 - 12 und einem Leitrechner (2).

## Claims

1. A method for telemetric data exchange between at least one agricultural working machine (1) and a master computer (2), wherein the agricultural working machine (1) is a combine harvester, a forage harvester, a baler, a tractor, a transloading vehicle, a telescopic handler or a green harvest machine, wherein the agricultural working machine (1) comprises an onboard computer (11), with which use data points (3) are measured in a fixed time interval (Δt) and transmitted to the master computer (2), wherein the use data points (3) comprise machine data for the agricultural working machine (1) and for each use data point (3), a measured value (31(t1, t2)) is measured by means of a sensor (14) provided for it, **characterized in that**
• the respective measured value (31(t2)) measured for a use data point (3) is compared with the previously detected measured value (32(t1)) for the use data point (3), wherein not all of the measured values (31(t2)) which have been measured are detected and transmitted to the master computer (2), but
• the measured value (31(t2)) of the use data point (3) which has been measured is then only detected as a new measured value (32(t2)) and transmitted to the master computer (2) when it differs from the previously detected measured value (32(t1)) by at least a threshold value (Δw).

2. The method according to claim 1, **characterized in that** a plurality of use data points (3) are measured in the time interval (Δt), wherein the use data points (3) are transmitted to the master computer (2) in a predefined data package (42) in which the sequence of the use data points (3) is prescribed, and in which a respective separating character (5) is provided between the use data points (3), wherein only the newly detected measured values (32(t2)) of the use data points (3) are transmitted to the master computer (2).

3. The method according to one of the preceding claims, **characterized in that** the data package (42) comprises a time stamp (6).

4. The method according to one of the preceding claims, **characterized in that** the use data points (3) comprise machine data, data from the working assembly, harvest data and/or location data.

5. The method according to one of the preceding claims, **characterized in that** a respective use data point-specific threshold value (Δw) and/or a use data point-specific time interval (Δt) is associated with each use data point (3).

6. The method according to one of the preceding claims, **characterized in that** the threshold values (Δw) and/or the time intervals (Δt) of the use data points (3) are preset, in particular on the master computer (2).

7. The method according to one of the preceding claims, **characterized in that** the threshold values (Δw) and/or time intervals (Δt) are transmitted to the master computer (2) independently of the use data points (3), in particular in a second predefined data package.

8. The method according to one of the preceding claims, **characterized in that** the newly detected measured values (32(t2)) and/or the threshold values (Δw) and/or the time intervals (Δt) for the use data points (3) are stored in the onboard computer (11).

9. An agricultural working machine (1) with an onboard computer (11) for carrying out the method according to one of the preceding claims, wherein the agricultural working machine (1) is a combine harvester, a forage harvester, a baler, a tractor, a transloading vehicle, a telescopic handler or a green harvest machine.

10. The agricultural working machine (1) according to claim 9, **characterized in that** the onboard computer (11) has a processing unit (17) which is configured to compare a measured value (31(t2)) of a use data point (3) which has been measured with the previously detected measured value (32(t1)) of the use data point (3), and then only to detect it as a new measured value (32(t2) and transmit it to the master computer (2) if it differs from the previously detected measured value (32(t1)) by at least a threshold value (Δw).

11. The agricultural working machine (1) according to one of claims 9 - 10, **characterized in that** the onboard computer (11) comprises at least one communications interface (12) for the transmission of the newly detected measured value (32(t2)) to the master computer (2), in particular a remote data transmission interface.

12. The agricultural working machine (1) according to one of claims 9 - 11, **characterized in that** the onboard computer (11) has a data memory for storing the newly detected measured value (32(t2)).

13. An assembly of at least one agricultural working machine (1) according to one of claims 9 - 12 and a master computer (2).

## Revendications

1. Procédé d'échange de données télémétrique entre au moins un engin de travail agricole (1) et un calculateur pilote (2), l'engin de travail agricole (1) étant une moissonneuse-batteuse, une ramasseuse-hacheuse, une presse à balles, un tracteur, un véhicule de transfert, un chargeur télescopique ou une machine de récolte fourragère, l'engin de travail agricole (1) comprenant un calculateur de bord (11) avec lequel des données utiles (3) sont mesurées dans un intervalle de temps (Δt) fixe et sont transmises au calculateur pilote (2), les données utiles (3) comprenant des données de machine de l'engin de travail agricole (1), et une valeur de mesure (31(t1,t2)) étant mesurée pour chaque donnée utile (3) à l'aide d'un capteur (14) prévu pour cette donnée,
**caractérisé en ce que**
• respectivement la valeur de mesure (31(t2)) mesurée pour une donnée utile (3) est comparée avec la valeur de mesure (32(t1)) mesurée auparavant pour la donnée utile (3), sachant que toutes les valeurs de mesure (31(t2)) mesurées ne sont pas recueillies et transmises au calculateur pilote (2), mais
• que la valeur de mesure (31(t2)) mesurée de la donnée utile (3) est recueillie en tant que nouvelle valeur de mesure (32(t2)) et transmise au calculateur pilote (2), uniquement si elle est différente d'au moins une valeur seuil (Δw) par rapport à la valeur de mesure (32(t1)) préalablement recueillie.

2. Procédé selon la revendication 1, **caractérisé en ce que** plusieurs données utiles (3) sont mesurées dans l'intervalle de temps (Δt), les données utiles (3) étant transmises dans un paquet de données (42) prédéfini au calculateur pilote (2) dans lequel l'ordre des données utiles (3) est fixé et dans lequel un signe de séparation (5) est respectivement prévu entre les données utiles (3), seules les valeurs de mesure (32(t2)) nouvellement mesurées des données utiles (3) étant transmises au calculateur pilote (2).

3. Procédé selon l'une des revendications précédentes, **caractérisé en ce que** le paquet de données (42) comprend un horodatage (6).

4. Procédé selon l'une des revendications précédentes, **caractérisé en ce que** les données utiles (3) comprennent des données de machine, des données des unités de travail, des données de récolte et/ou des données de position.

5. Procédé selon l'une des revendications précédentes, **caractérisé en ce qu'**une valeur seuil (Δw) spécifique de donnée utile et/ou un intervalle de temps (Δt) spécifique de donnée utile est associé(e) respectivement à chaque donnée utile (3).

6. Procédé selon l'une des revendications précédentes, **caractérisé en ce que** les valeurs seuils (Δw) et/ou les intervalles de temps (Δt) des données utiles (3) sont préréglés notamment sur le calculateur pilote (2).

7. Procédé selon l'une des revendications précédentes, **caractérisé en ce que** les valeurs seuils (Δw) et/ou les intervalles de temps (Δt) sont transmis au calculateur pilote (2) indépendamment des données utiles (3), notamment dans un deuxième paquet de données prédéfini.

8. Procédé selon l'une des revendications précédentes, **caractérisé en ce que** les valeurs de mesure (32(t2)) nouvellement recueillies et/ou les valeurs seuils (Δw) et/ou les intervalles de temps (Δt) des données utiles (3) sont enregistrés dans le calculateur de bord (11).

9. Engin de travail agricole (1) doté d'un calculateur de bord (11) en vue de la mise en oeuvre du procédé selon l'une des revendications précédentes, l'engin de travail agricole (1) étant une moissonneuse-batteuse, une ramasseuse-hacheuse, une presse à balles, un tracteur, un véhicule de transfert, un chargeur télescopique ou une machine de récolte fourragère.

10. Engin de travail agricole (1) selon la revendication 9, **caractérisé en ce que** le calculateur de bord (11) présente une unité de calcul (17) qui est conçue pour comparer une valeur de mesure (31(t2)) mesurée d'une donnée utile (3) avec la valeur de mesure (32(t1)) recueillie auparavant pour la donnée utile (3), et pour la recueillir en tant que nouvelle valeur de mesure (32(t2)) et la transmettre au calculateur pilote (2), uniquement si elle est différente d'au moins une valeur seuil (Δw) par rapport à la valeur de mesure (32(t1)) préalablement recueillie.

11. Engin de travail agricole (1) selon l'une des revendications 9 à 10, **caractérisé en ce que** le calculateur de bord (11) comprend au moins une interface de communication (12) destinée à transmettre la valeur de mesure (32(t2)) nouvellement mesurée au calculateur pilote (2), en particulier une interface de télétransmission de données.

12. Engin de travail agricole (1) selon l'une des revendications 9 à 11, **caractérisé en ce que** le calculateur de bord (11) présente une mémoire de données destinée à sauvegarder la valeur de mesure (32(t2)) nouvellement mesurée.

13. Agencement constitué d'au moins un engin de travail agricole (1) selon l'une des revendications 9 à 12 et d'un calculateur pilote (2).
